# EUROPEAN PATENT APPLICATION

(11) **EP 2 068 545 A1**
(43) Date of publication of application: **10.06.2009**
(21) Application number: 08169979.5
(22) Date of filing: 26.11.2008
(51) Int. Cl.: H04N 1/00

(54) **Document scanning system**

(30) Priority: 03.12.2007 EP 07122100
(71) Applicant: Océ-Technologies B.V., 5900 CA Venlo (NL)
(72) Inventor: Slijp, Dion F., 6523 RP Nijmegen (NL); Travaille, Ale M., 6663 HR Lent (NL); Krom, Marcus W., 5631 JH Eindhoven (NL); De Smet, Sebastian P.R.C., 5914 PE Venlo (NL); Brassé, Marco H.H., 5754 SC Deurne (NL); Janssen, Johannes H.M., 5941 JP Velden (NL)
(74) Representative: van Meeteren, Arend Anthonie

(57) **Abstract**

A document scanning system comprising:
- a scan apparatus (10) adapted to scan a document and to create and store electronic raw data representing the scanned document;
- an input system (20; 32) permitting a user to input settings for the scanned document;
- a start mechanism (18) causing the scan apparatus (10) to start a scan process; and
- a processing unit (26) adapted to process the raw data and to create a formatted document file representing the scanned document, wherein:
- the input system (20; 32) is adapted to permit the user to input format settings for a document after the start mechanism has started the scan process for that document; and
- the processing unit (26) is adapted to process the raw data in accordance with the format settings.

## Description

### Document scanning system

The invention relates to a document scanning system comprising:
- a scan apparatus adapted to scan a document and to create and store electronic raw data representing the scanned document;
- an input system permitting a user to input settings for the scanned document;
- a start mechanism causing the scan apparatus to start a scan process; and
- a processing unit adapted to process the raw data and to create a formatted document file representing the scanned document.
   US 5 384 632 discloses a scanning system of this type which forms part of a digital copier. Typically, the user makes certain settings for defining the scanning and copying conditions before he presses a start button to start the copying operation. In the system described in this publication, however, the user may still change his settings after the copying operation has started. Thus, he may for example change the number of copies, the magnification ratio, the paper size and the like. These changes will then apply to the copies that are made after the change.
   US 2004/0095594 A1 discloses a document scanning system, which, in addition to a manual mode in which the settings are input manually by the user, has an automatic mode in which certain features of the scanned document, e.g. color or black/white, are detected automatically, and the settings are determined automatically in accordance with the result of that detection.
   US 5 815 786 discloses a copier in which copying is performed automatically as soon as the user closes a cover of a platen on which the document is placed in order to be scanned.
   US 2002/0133543 A1 discloses a document scanning system that includes a scan to e-mail function. Thus, instead of immediately printing a copy of the scanned document, an electronic file representing this document in a standard format such as PDF or the like is sent by e-mail to a remote recipient. In general, such copy to e-mail functions tend to considerably increase the traffic load on a data network, e.g. an Intranet of a company or organization. In order to reduce this data traffic, the scan document is converted into a reduced image, whereas the formatted file of the complete document is stored on a server. The reduced image is then sent to the recipient by e-mail, accompanied with a link to the location where the complete file is stored, so that the recipient may download the file from that location. In this case, however, the recipient has no control over the scan parameters and the format of the downloaded file.
   It is an object of the invention to provide a document scanning system that provides the user a high flexibility in changing format settings and is nevertheless convenient and expedient to use.
   To that end, in a document scanning system of the type indicated above,
- the input system is adapted to permit the user to input format settings for a document after the start mechanism has started the scan process for that document; and
- the processing unit is adapted to process the raw data in accordance with the format settings.

The term "format settings" as used herein encompasses all settings that have an influence on the appearance of the scanned image and/or on the electronic representation of that image. Thus, examples of format settings comprise specifications of standard formats such as PDF, JPEG, TIFF, PNG and the like, but also quality settings such as lightness of the image, color or black/white, resolution, halftone or binary image, contour enhancement and the like.

In a copying application, the invention has the advantage that the user can make his settings while the document is being scanned already. This considerably reduces the time which the user has to spend at the copying machine in order to make a copy, especially in cases where the user is not satisfied with the default settings of the machine but wants to input his own settings. In a conventional copier, the user has to enter the settings first, before he presses the start button, and then he still has to wait until the document image is scanned, processed and printed. In contrast, according to the invention, the time needed for changing the settings is largely absorbed in the time that is needed for scanning, anyway, and at least a considerable part of the image will have been scanned-in already when the user has finished his setting operations and presses the start button. As a result, the so-called "first copy out time" (FCOT) is reduced significantly.

In a scan to e-mail application, the invention has the advantage that it is left up to the recipient to define the format settings in accordance with his individual needs. Instead of converting the raw data into the format in which the file is finally sent to the recipient immediately after the document has been scanned-in, the raw data are stored at least for a certain time at the scan apparatus, and the input system permitting the user to input his settings comprise a system for sending a download form to the remote user (recipient), said form permitting him to make his settings at his remote workstation and then return the completed form to the processing unit where the raw data are converted into the format that has been specified on the download form. Thus, although the remote user or recipient is actively alerted when a scan has been made for him, it is left to the discretion of this user whether he wants to download the scanned document or not and, if he wants to, whether he wants to have the document in a high definition format requiring a large amount of data, or in a more "compressed" format requiring less bandwidth and storage capacity.

As another advantage, when a document is to be sent to several recipients, this document has to be scanned-in only once, and nevertheless each recipient can individually determine the format in which he wants to receive the electronic file.

More specific optional features of the invention are indicated in the dependent claims.

Since the format settings will normally be made after the scan process has started, it is convenient to implement an autoscan function, which means that the scan process is started automatically as soon as the user has placed a document on the platen of a scan apparatus and has closed the cover or, in case of an automatic document feeder, as soon as the document feeder detects the presence of a document. Then, the start button on the machine only has the function to confirm the settings that may or may not have been changed by the user, and to start the image processing in accordance with the settings thus confirmed.

In many cases, the users will be satisfied with the default settings. For this reason, it is not compulsory within the framework of the invention that the processing of the raw data is postponed until the user has pressed the start button. Instead, in a copying application, the image processing may be started as soon as a sufficient amount of raw data is available, and the processing may either be based on fixed default settings or may depend on an automatic analysis of the part of the image that has already been scanned-in. Then, if the user does not change the settings, the copy will be ready in an even shorter time. On the other hand, if the user chooses to make any changes in the settings, the image processing will start again, but now with the changed settings. The result of the previous (in most cases incomplete) processing step that has been performed on the basis of the wrong settings may be discarded or may be saved for eventual future use.

Although it is an important feature of the invention that the settings can be changed or determined after the scan process has started, it is not excluded that some settings can also be entered before scan process is started. For example, when a user wants to enlarge the scanned image by a substantial factor, a satisfactory quality of the enlarged image can only be obtained on condition that the original scan has been performed with a sufficiently high resolution. Consequently, if the user scans a document with an intention to later enlarge the scale thereof, it will be useful to enter a command for setting the scan resolution to maximum before the scan process is started. However, this does not necessarily mean that the scanned image will actually be enlarged in the image processing step. Instead, this will depend upon the settings that the user makes after the scan process has started.

In a copying application, the raw data may be deleted as soon as the image has been processed. However, depending on the storage capacity that is available at the location of the scan apparatus, it may useful to store the raw data for some longer time, in order to provide the possibility that several document files in different formats are created from one and the same original, without having to scan-in the original once again.

Of course, in a scan to e-mail application, the raw data should be stored at least for a certain time that is long enough to permit the remote user to fill-in and to return the download form including the format specifications. Conveniently, the raw data may be deleted when the recipient has downloaded his copy. However, instructions input either by the local user, who has fed the original document into the scan apparatus, or the remote user, who has received the electronic copy, may specify that the raw data are deleted immediately or are kept for future use, possibly by other recipients.

In a scan to e-mail application it may also be useful to attach a low quality file of the complete scanned document to the message that is sent to the user along with the electronic form. In case that the user responds too late and the raw data have been deleted in the meantime, this will ensure that the recipient is at least in possession of the low quality file which gives an impression of the relevance of the document without requiring too much data traffic.

Instead of downloading the scan file to his workstation, the remote user may also have the option to direct the scan file to a printer (e.g. a printer that is installed at the same location as the scan apparatus), in order to have the document printed. This will avoid the data traffic that has heretofore been necessary for first sending the file to the recipient and then sending the file from the recipient's workstation to the printer.

Preferred embodiments of the invention will now be explained in conjunction with the drawings, wherein:
- Fig. 1: is a block diagram of a multifunctional scanning and copying device according to the invention;
- Fig. 2: is a time chart illustrating a scan process in accordance with the invention;
- Fig. 3: is a time chart of a scan process according to a modified embodiment;
- Fig. 4 to 7: illustrate display screens on an operating panel of the device shown in Fig. 1;
- Fig. 8: is a flow diagram of a scan to e-mail process in accordance with the invention; and
- Fig. 9: shows a layout of an electronic download form that is sent to a remote user in the scan to e-mail process according to Fig. 8.

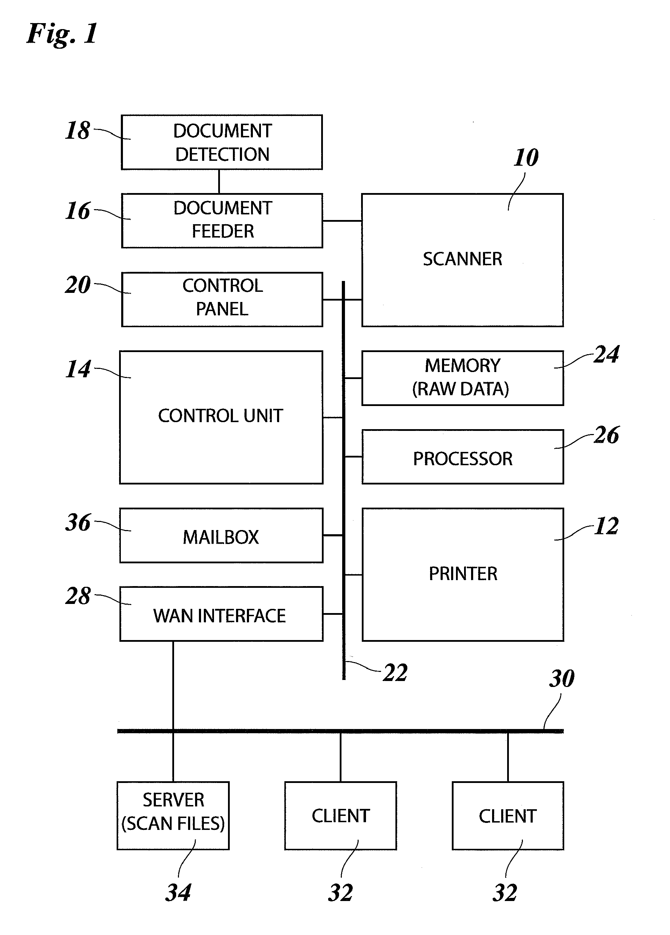

As is shown in Fig. 1, a so-called multifunctional device (MFD) that may be used for scan, copying and print applications comprises a scan apparatus 10, a printer 12 and a control unit 14 including suitable hardware and software for controlling the functions of the scan apparatus, the printer and other functional units that have been shown in Fig. 1.

As is generally known in the art, the scan apparatus 10 is equipped with an automatic document feeder 16 onto which a single- or multi-sheet original document can be placed and which will then supply the sheets one by one through the scan apparatus. If the sheets of the original document have images on both sides (duplex originals), they can also be reversed in the document feeder and sent to the scan apparatus a second time for scanning the reverse side of each sheet.

In the example shown, the document feeder 16 comprises also a document detection system 18 that is capable of detecting a situation in which a single document sheet or a stack of sheets of a multi-page document has been placed onto a receiving tray of the document feeder 16. This document detection system 18 may also be capable of detecting the format of the sheets that have been placed onto the tray.

The scan apparatus 10, the printer 12, the control unit 14 and a control panel 20 that is conveniently provided on the scan apparatus 10 are connected to one another by a local network 22, so that the connected devices, including the control panel 20, may be controlled by the control unit 14.

As is well known in the art, the control panel 20 will include an electronic display and a number of keys, or, alternatively, a touch screen permitting a user to enter instructions and settings and permitting messages that are generated by the control unit 14 to be displayed to the user. The scan apparatus 10 may be of any conventional type and is capable of scanning the images on the sheets of the original document and detecting a certain color or brightness value for each pixel of the image. The detected values representing the complete image information are then stored as digital raw data in a memory 24 that is also connected to the network 22.

An image processor 26 is adapted to fetch the raw data from the memory 24 via the network 22 and to perform image processing operations on these raw data in order to convert the scanned images into a selected one of several formats including at least one printable format, so that printed copies of the scanned document can be printed with the printer 12.

A WAN interface 28 serves as a gateway between the local network 22 and a wide area network (WAN) 30 such as the Internet or an Intranet, and thus permits the MFD to communicate with a number of client computers 32 and, in the example shown, a server 34 via the WAN 30.

Thus, a remote user may send a document that he wants to have printed from one of the client computers 32 to the MFD. The print file is received via the WAN interface 28 and may be stored in a mailbox 36 where a certain logical storage area is reserved for that particular user. Then, when the printer 12 is available, the data that have previously stored in the mailbox 36 may be printed.

Conversely, document files that have been created by the processor 26 by processing the scanned raw data may be sent to one of the client computers 32 or to the server 34. As has been symbolized graphically in Fig. 1, the server 34 may be connected directly to the WAN interface 28, so that no traffic load on the WAN 30 is caused when data are transferred from the processor 26 to the server 34 which may include or may be connected to a mass storage device (not shown) for processed scan files.

In a scan to e-mail application, for example, a document that has been scanned-in with the scan apparatus 10 and has been transformed into a formatted scan file by the processor 26 could be stored on the server 34 instead of being sent directly to the client computer 32 of the intended recipient. Then, under the control of the control unit 14 and the WAN interface 28, a short e-mail message may be generated automatically and may be sent to the recipient in order to notify that a scanned copy of the document is available for him. Then, the recipient may download the scan file from the server 34. In a preferred embodiment of the invention, however, the scan to e-mail process is modified in a manner that will be described later in this specification.

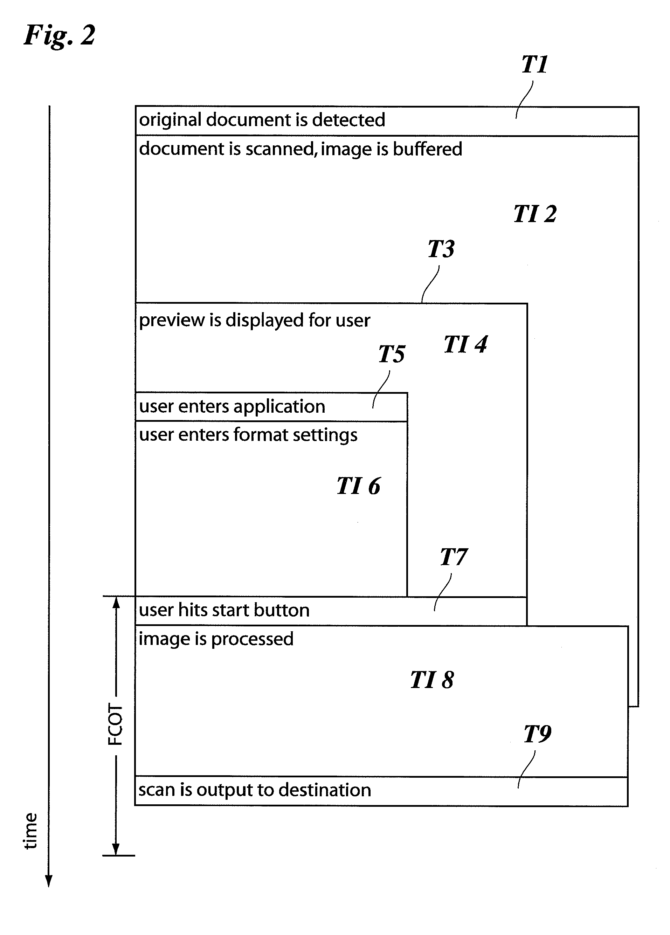

As a first example illustrating the operation of the scanning system according to the invention, e. g. in a copy application, Fig. 2 shows a time chart of a scan process. A local user who wants to copy a document or wants to send the same to a remote recipient approaches the scan apparatus 10 and places the document onto the tray of the document feeder 16. This is detected by the document detection system 18 at an instant T1. The corresponding detection signal is transmitted to the control unit 14 and, thereupon, this control unit immediately starts the document feeder 16 and the scan apparatus 10, so that the document will be scanned-in automatically. This scan operation extends over a certain time interval that has been designated as TI 2 in Fig. 2. The raw data representing the images on the scanned document pages are buffered in the memory 24.

Optionally, the scan result may be fed back to the user in the form of a preview that is displayed on the display of the control panel 20. In the example shown, a first page of the document has been scanned-in completely at a time instant T3, and this starts a time interval TI 4 during which the preview is displayed.

At some point of time T5 (which may also be earlier than T3), the user indicates via the control panel 20 whether he wants to make a copy or whether he wants the scan to be saved for other purposes.

Then, during a time interval TI 6 that may overlap with the (scanning) time interval TI 2 or follow behind it, the user may enter settings for the image processing to be performed by the processor 26. These settings may for example specify any standard format, e.g. PDF, in which the scan file is to be stored, as well as a certain image qualities such as resolution, brightness of the image, magnification or reduction of scale, image type (color or black/white, binary or halftone, etc.), and many more.

It will be understood that all these settings have an influence only on the operation of the processor 26 but not on the operation of the scan apparatus 10. Of course, in order for the processor 26 to be able to produce the desired results, the scan process must fulfill certain requirements. The scan resolution must be at least as high as the resolution required in the format settings. The dimensions (length and width) of the scanned part of the document platen of the scan apparatus should be as large as possible, i.e. the scanned area will cover the practically the entire document platen, whereas any possible trimming to smaller document sheet sizes will be done by the processor 26, either on the basis of the settings entered by the user or on the basis of format detection in the document feeder. Likewise, the document feeder may detect whether the original document consists of simplex or duplex sheets, so that the full contents of the document will be scanned. It is not necessary, however, that the sequence in which the front and back sides of the document sheets are scanned corresponds to the page sequence, because the pages may be ordered later by the processor 26.

During the time interval TI 6 in which the user enters the settings, the processor 26 may already be operative to process at least those data that are used for the preview, so that the user may immediately see the result of any changes he makes in the settings. This is comparable to known scanner concepts in which a small portion of an original document is scanned in a so-called pre-scan in order to provide a preview. It should be stressed that, in the scanning system disclosed herein, the scan process performed in the time interval TI 2 does not just consist of such a pre-scan but consists of the final and only scan process for the entire document.

When the user is satisfied with the settings he has made, he presses a start button on the control panel 20 at a time instant T7. By doing so, he confirms that the settings entered during the time interval TI 6 are considered to be valid and will not be altered any more. This causes the processor 26 to start processing the raw data for the entire document on the basis of the settings made by the user, in order to produce the scan file. This image processing is performed in a time interval TI 8.

As shown in Fig. 2, the processing time interval TI 8 may optionally overlap with the scanning time interval TI 2, e.g. the first pages of the document are being processed while the last pages are still being scanned.

At a time instant T9, the image processing is completed, and the scan file is either sent its destination, e. g. to the printer 12. In case of a copy application, the raw data in the memory 24 may then be deleted. However, in case of a scan to e-mail application, it will be preferable to retain the raw data at least for some time in the memory 24, as will become clear when the scan to e-mail function is described in greater detail below.

In a copying system, a useful indicator for the productivity of the system is the so-called "first copy out time" (FCOT) which is defined as the length of the time interval between the instant where the user hits the start button and the instant where the first copy is received. In the diagram shown in Fig. 2, the first copy will be output shortly after the point of time T9, so that FCOT will mainly consist only of the time interval TI 8 needed for image processing. It will be appreciated that, in general, the time interval TI 2 in which the document is scanned will not cause any increase in FCOT.

Another parameter indicating the versatility of a scanning system is the total time that a user has to spend at the scan apparatus. In the shown embodiment, this would be the time from T1 to T9 (or the end of FCOT). As illustrated in the example in Fig. 2, the time interval TI 6 in which the user makes his settings can be fully absorbed in the scanning time TI 2. For comparison, in a conventional scanning system, the settings would be made in a time interval before the point T1 where the scan process starts, and the time the user has to spend at the apparatus would be significantly longer.

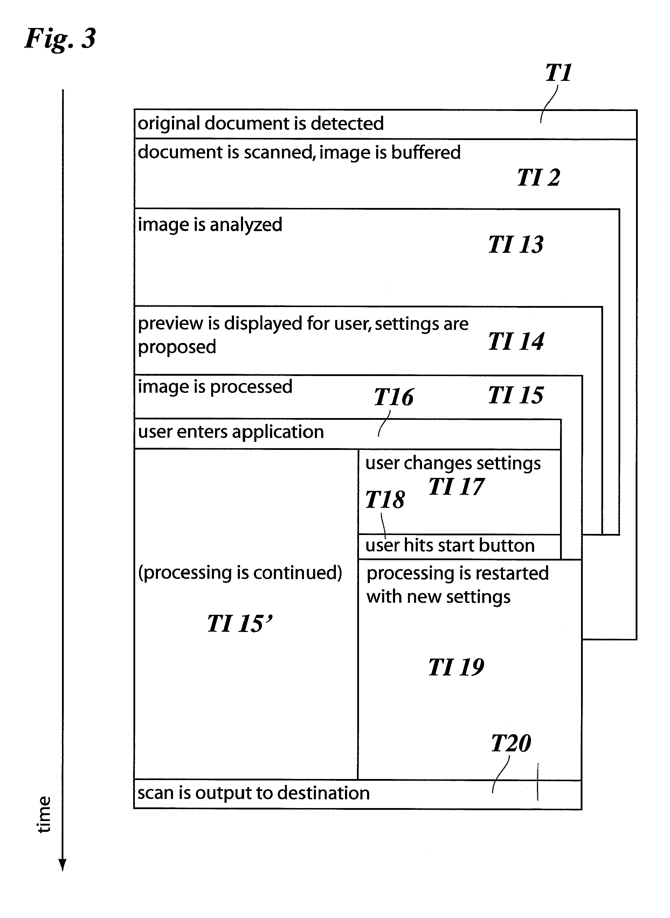

Fig. 3 is a time chart similar to Fig. 2 but illustrates a workflow according to a modified embodiment. The events and processes at T1 and TI 2 are the same as in Fig. 2. In this embodiment, however, as soon as a certain part of the document has been scanned, the raw data are analyzed by the processor 26 (or other processing means) during a time interval TI 13. In this analysis, it may be determined, for example, whether the original is a color or black/white original, whether it contains photographs and/or halftone areas or only text, the background density of the document may be detected, and the like, and the parameters or settings for the image processing are automatically determined in accordance with the result of this analysis. The settings that have automatically been determined by the processor 26 are displayed together with the preview during a time interval TI 14. The image analysis may meanwhile continue on the basis of more recent data, and the proposed settings may be modified in accordance with the result.

As soon as sufficient data have been analyzed for determining the appropriate settings with some reliability, the image processing is started automatically. This processing will be based on the settings that have been determined automatically at the beginning of a time interval TI 15 in Fig. 3.

At a point of time T16, the user enters the type of application (e. g. copy). Subsequently, the user has the possibility to change the settings manually on the operating panel 20, and the further processing depends upon whether or not the user changes the settings manually.

If there is no input from the user relating to changes of the settings, i.e. if the user is satisfied with the proposed settings, as judged by the preview, the image processing that has been performed during the time interval TI 15 is continued (TI 15'). However, if the user changes the settings during a time interval TI 17 and then presses the start button at T18, the processing routine that has been performed during time interval TI 15 is abandoned, and another image processing routine on the basis of the changed settings is performed during a time interval TI 19. This means that the processing work that has "tentatively" been done during time interval TI 15 is wasted.

Finally, when the image processing is completed, the result is output at T20.

The result of the processing route via time intervals TI 17 and TI 19 will be the same as in Fig. 2, and the FCOT will also be the same. However, if the user does not make any changes in the settings (route via TI 15'), the FCOT will be even shorter, because image processing has started already before the user had the option to change the settings.

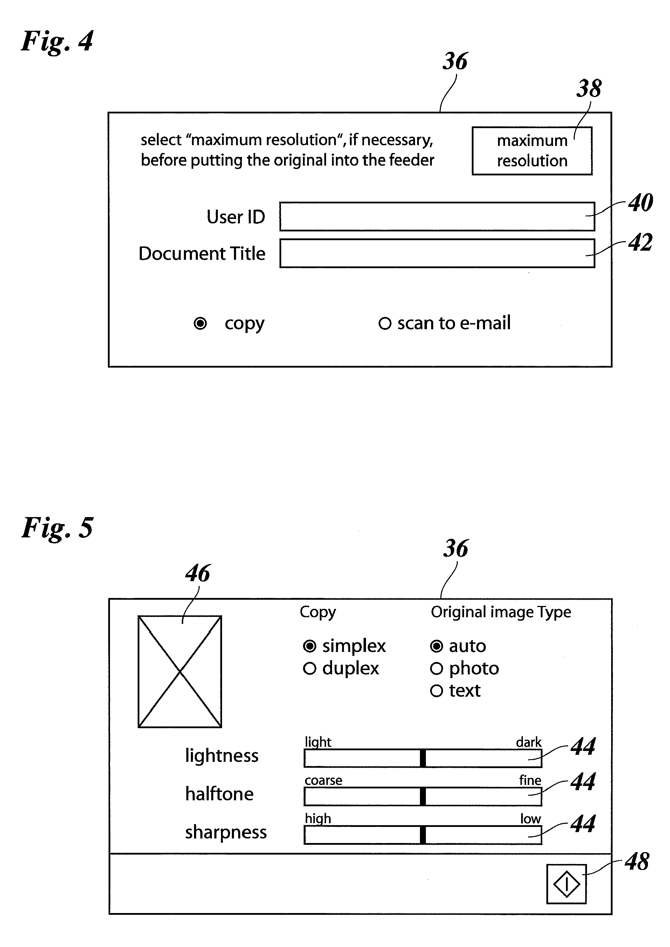

In order to illustrate examples of interactions between the user and the MFD via the control panel 20, Figs. 4 to 7 illustrate a display screen 36 on the operating panel 20 under different conditions. In Fig. 4, the screen 36 is shown in a state when a user approaches the scan apparatus but no document has yet been placed into the tray of the document feeder 16 (i.e. prior to T1 in Fig. 2 or 3).

It is assumed here that the scan apparatus 10 is capable of operating in two can modes, a normal mode with normal scan resolution and a special mode with an increased scan resolution which will be useful in case of later enlargements of the scanned images. A button 38 on the screen 36 permits the user to select the maximum resolution. If this maximum resolution is required, the button 38 should be pressed before the document is put into the document feeder, because this would already cause the scan apparatus to start scanning.

Optionally, the user may be prompted to enter a user identification (ID) before he is allowed to use the apparatus. The ID may be entered by typing a PIN code or a password into a field 40 on the screen 36, by plugging-in a USB stick storing a key code, or the like.

As another option, the user may enter a document title for the document to be scanned in a field 42. This title may then be printed on a cover sheet of a copy, when the copy mode is selected, or may identify the scan file when the same is stored.

In the example shown, the user can only select among the application modes "copy" and "scan to e-mail", and "copy" is the default selection.

Fig. 5 shows another example of a start screen 36 that may be displayed on the control panel 20. This screen shows default values of a number of settings (format settings) that may be changed by the user. These settings include settings specifications the image type, e.g. photo or text of the original document. The default setting is automatic recognition ("auto") of the image type (as in Fig. 3, for example).

Other setting options relate to the lightness of the processed image, the halftone processing and the sharpness (contrast and/or contour enhancement) of the image. These options are symbolized on the screen 36 by slides 44 that may be moved from "light" to "dark", from "coarse" to "fine" etc..

Moreover, the screen 36 in Fig. 5 shows an empty preview window 46 as well as copy settings specifying whether simplex or duplex copies shall be printed.

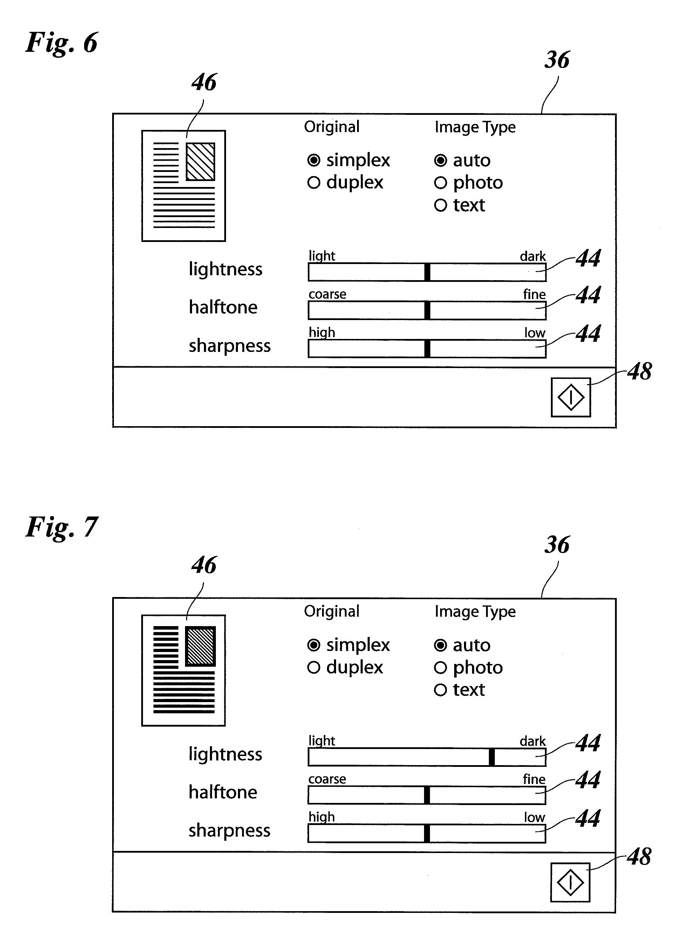

When the original document is placed onto the feeder (or, if the feeder does not have an autoscan function, when a start button 48 is pressed), the screen 36 changes from the appearance according to Fig. 4 or 5 to that in Fig. 6 which corresponds to the start of the time interval TI 4 in Fig. 2. A preview of e.g. the first page of the document, is now shown in the preview window 46. The start button 48 now has the function to confirm the selected settings and to start the image processing (time T7 in Fig. 2).

In Fig. 7, the user has selected a darker copy by moving the slide 44 for the lightness, and the expected result is immediately shown in the preview window 46. When the start button 48 is pressed in the condition shown in Fig. 7, the image processing will be performed with threshold values leading to a darker image in the scan file.

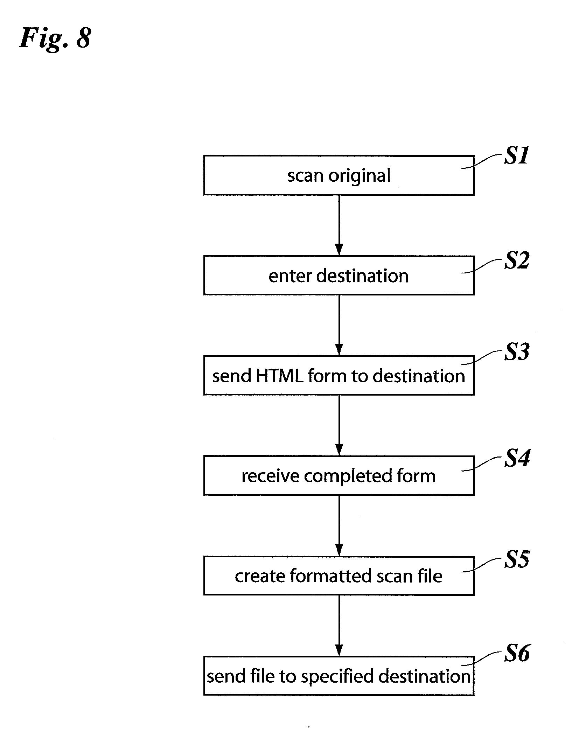

When the user selects the application "scan to e-mail" (Fig, 4), the interaction with the machine may be the same as has been described in conjunction with Figs. 4 to 7. However, in a preferred embodiment, the option to change the format settings is in this case provided not for the user at the machine but for the user who is to receive the e-mail. In this case, the screen 36 may for example remain in the condition shown in Fig. 4, and the process flow will comprise a number of steps that have been shown in Fig. 8.

The original document is scanned in step S1 and the raw data are stored in the memory 24, possibly in combination with the user ID and the document title that have been entered in the fields 40 and 42. Then, when the user has selected "scan to e-mail", step S2 will be executed, where the user is prompted on the screen 36 to enter the destination for the scan file in an additional input field (not shown in Fig. 4). The destination may for example be specified by an e-mail address of a recipient. Then, in step S3, the control unit 14 will cause the WAN interface to send an electronic download form (.e.g. in HTML format) by e-mail to the designated recipient.

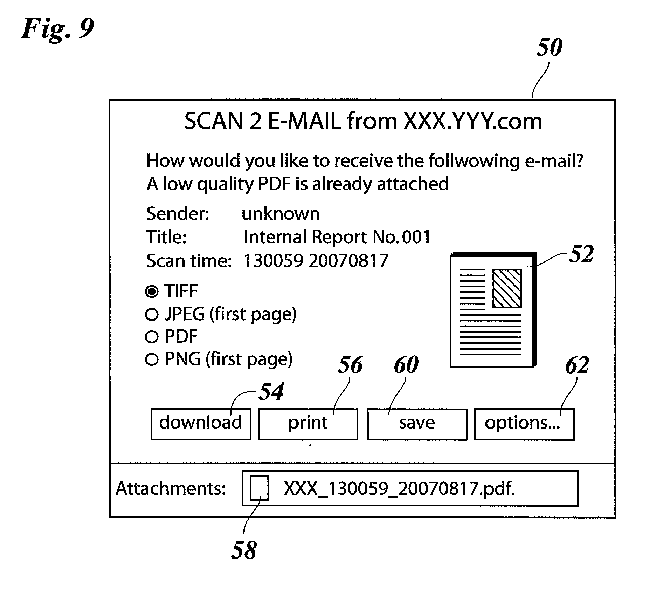

An example of such a form 50 is shown in Fig. 9. This form may indicate the sender of the scan document, i. e, the user who has entered the document at the scan apparatus 10, if this sender has identified himself by his ID. It may further indicate the document title and the time and date when the document was scanned. A preview 52 of the scanned document is also included in the form 50. This preview 52 is symbolically represented at a stack of sheets, and the height of the stack symbolizes the number of pages of the scanned document.

The form 50 will be displayed on a computer screen of the client computer 32 of the recipient and may be edited by the recipient by means of a mouse and a keyboard associated with that computer. In the example shown, the recipient has the option to choose one of four different formats (TIFF, JPEG, PDF or PNG) in which he may receive the scan file. Further, in this embodiment, the formats JPEG and PNG are only available for the first page in case of a multi-page document.

After having selected the desired format, the recipient may press a "download" button 54 on the form 50, with the result that the completed form, i.e. the form indicating in the selected format, will be sent back via the WAN interface 28 to the control unit 14. This corresponds to step S4 in Fig. 8. The control unit 14 reads the selected format and instructs the processor 26 to fetch the raw data from the memory 24 and to convert them into a file in the selected format (step S5). When the image processing is completed, this file will be sent to the client computer 32 of the recipient (step S6).

As is shown in Fig. 9, the form 50 includes also a print button 56. When the recipient presses the print button 56 instead of the download button, the form 50 will also be sent back to the MDF and will cause the processor 26 to convert the raw data in the same manner as before. However, these data will now be directed to the printer 12 in order to print a hard copy of the document. Of course, the selection of formats on the form 50 will then be limited to formats that can be processed by the printer 12.

According to yet another option (not shown in Fig. 9), the scan file that has been created by the processor 26 is stored on the server 34, from where it may be downloaded by other users.

As is further shown in Fig. 9, the e-mail transmitting the form 50 also includes an attachment 58 which consists of a low-quality copy of the scanned document, e.g. a low-resolution PDF-file that is identified by an identification XXX of the scan apparatus 10 and the scan time and date. If the recipient is satisfied with this low quality copy of the document, he may press a "save" button 60 on the form 50 to save the attachment 58 rather than downloading a high quality copy which would require the transmission of a significantly larger amount of data. The "save" option serves also as a safeguard for the case the raw data in the memory 24 have already been deleted at the time when the recipient tries to download the high quality document.

Finally, an "option" button 62 on the form 50 permits to extend the form in order to offer to the recipient a number of additional options. For example, the recipient could be offered a possibility to change settings such as lightness, halftone etc. in a similar way as in Figs. 6 and 7. Other options may permit to specify a time during which the raw data of this document shall be stored in the memory 24 for later download by the same recipient or any other user. Other options may permit the recipient to have the scan file sent to another destination, e.g. another client computer 32 or another printer, e.g. a color printer, if the printer 12 in Fig. 1 is only a black/white printer but the scanner 10 is a color scanner.

## Claims

1. A document scanning system comprising:
- a scan apparatus (10) adapted to scan a document and to create and store electronic raw data representing the scanned document;
- an input system (20, 36; 32, 50) permitting a user to input settings for the scanned document;
- a start mechanism (18; 48) causing the scan apparatus (10) to start a scan process; and
- a processing unit (26) adapted to process the raw data and to create a formatted document file representing the scanned document,
**characterized in that**
- the input system (20, 36; 32, 50) is adapted to permit the user to input format settings (44; TIFF, JPEG, PDF, PNG) for a document after the start mechanism has started the scan process for that document; and
- the processing unit (26) is adapted to process the raw data in accordance with the format settings.

2. The system according to claim 1, wherein the start mechanism comprises a document detection system (18) capable of detecting a document presented to the scan apparatus (10) and automatically starting the scan process in response thereto.

3. The system according to claim 1 or 2, wherein the input system comprises a control panel (20) located at the scan apparatus (10), and a control unit (14) adapted to control the control panel (20), the scan apparatus (10) and the processing unit (26).

4. The system according to claim 3, wherein the control panel (20) comprises a screen (36) adapted to show default settings and to permit the user to change the settings, and a start button (48) permitting the user to validate the settings and to cause the processing unit (26) start processing the raw data in accordance with these settings.

5. The system according to any of the preceding claims, comprising a printer (12) and having a print mode wherein the formatted document file created by the processing unit (26) is sent to the printer (12) for being printed.

6. The system according to any of the preceding claims, wherein the processing unit (26) is adapted to analyze the raw data of a scanned document and to automatically determine setting parameters in accordance with the result of the analysis, the input system is adapted to display the selected setting parameters to the user and to permit the user to confirm or change the same, and wherein the processing unit (26) is adapted to stop processing the raw data, when the user changes the settings, and then to start processing the raw data once again on the basis of the changed settings.

7. The system according to any of the preceding claims, wherein the input system comprises a remote computer (32) that is connected to the scan apparatus via a network (30), and wherein a control unit (14) of the scan apparatus (10) is adapted to send a message to the computer (32) when a scan process for a document has been performed.

8. The system according to claim 7, wherein said message includes an electronic form (50) that is sent to the computer (32) to be edited there by indicating format settings and then to be returned to the control unit (14) for causing the processing unit (26) to convert the raw data on the basis of the settings specified on the form (50).

9. The system according to claim 8, wherein the form (50) permits the user at the remote computer (32) to indicate at least one destination where to send the formatted document file.

10. The system according to any of the claims 7 to 9,wherein said message includes, as an attachment (58), a copy of the scanned document in a format having a lower quality and therefore comprising a smaller amount of data than the formats that can be specified on the form (50).

11. The system according to any of the preceding claims, wherein the input system (36; 50) is adapted to display a preview (52) of the scanned document.
